# EUROPEAN PATENT APPLICATION

(11) **EP 4 578 547 A1**
(43) Date of publication of application: **02.07.2025**
(21) Application number: 23220347.1
(22) Date of filing: 27.12.2023
(51) Int. Cl.: B01L 3/00, G01N 35/10

(54) **MICROFLUIDIC DEVICE FOR A LABORATORY AUTOMATION DEVICE**

(71) Applicant: Tecan Trading AG, 8708 Männedorf (CH)
(72) Inventor: PIEHLER, Andreas, 7324 Vilters (CH); Ott, Philipp, 8496 Steg (CH); HÄLG, Werner, 8708 Männedorf (CH)
(74) Representative: Sykora & König Patentanwälte PartG mbB

(57) **Abstract**

A microfluidic device (22) for a laboratory automation device (10) comprises a first tapered receptacle (40a), a second tapered receptacle (40b) and a channel (48) interconnecting the first tapered receptacle (40a) and the second tapered receptacle (40b).

## Description

### FIELD OF THE INVENTION

The invention relates to a microfluidic device for a laboratory automation device, a microfluidic set for a laboratory automation device and to a laboratory automation device. The invention further relates to a method, a computer program, a computer-readable medium for operating a microfluidic device with a laboratory automation device.

### BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analyzed by means of a biochemical procedure. Such a procedure consists in various operations like adding substances, incubating, separating, etc. and a measurement process which quantitatively or qualitatively measures the amount or presence of a substance indicating the specific disease.

Sometimes microfluidic devices are used during such procedures. Usually, these microfluidic devices have to be filled with a liquid manually and have to be transported manually to a measurement device, which analyses the content of the microfluidic device.

### DESCRIPTION OF THE INVENTION

It is an objective of the invention to simplify the processing of liquids with a microfluidic device inside a laboratory automation device. It is a further objective of the invention to enable a laboratory automation device adapted for handling pipette tips also to handle microfluidic devices, which microfluidic devices in particular do not comprise pumps.

These objectives are achieved by the subject-matter of the independent claims. Further exemplary embodiments are evident from the dependent claims and the following description.

An aspect of the invention relates to a microfluidic device for a laboratory automation device. The microfluidic device may be seen as a microfluidic chip. The microfluidic device may be a single, one-piece member, which can be transported by the laboratory automation device with its pipetting arm. In particular, the microfluidic device may be picked up with pipette tips, in particular disposable pipette tips from a tray, and may be moved around with a pipetting arm. The liquid inside the microfluidic device can be pumped through a channel of the microfluidic device with pressures generated in the pipette tips. A laboratory automation device may be any device having components for performing these tasks, i.e., a pressure generator, such as a pump and a pipetting arm. In this way, the microfluidic device does not need internal pumps and/or valves, which may simplify the structure and/or manufacturing of the microfluidic device.

According to an embodiment, the microfluidic device comprises a first tapered receptacle and a second tapered receptacle and a channel interconnecting the first receptacle and the second receptacle. Each of the first receptacle and the second receptacle are designed for receiving the lower end of a pipetting tip. In particular, they are both tapered, i.e., they have an opening decreasing in diameter in a direction, in which the respective pipette tip is inserted into the respective receptacle. For example, each of the receptacles may have a conical inner surface. When the respective pipette tip is inserted into the receptacle, it stays there by friction fit and the microfluidic device can be transported around with the pipetting arm of the laboratory automation device.

The channel, which may be seen as a microchannel, interconnects the two receptacles. For example, the channel may have a diameter between 100 µm and 1000 µm. By applying different pressures to the pipette tips, liquid may be pumped through the channel. Such a liquid may be already present in the channel or may be dispensed into the channel via one of the pipette tips.

The channel may comprise cavities and/or chambers in which chemical reactions take place. The channel may comprise a window for performing measurements with light inside the channel. The microfluidic device may comprise electric and/or electronic components for performing measurements inside the channel. For performing the measurements, the microfluidic device may be transported with the pipetting arm to a measurement device.

With the microfluidic device, the general problem of interfacing microfluidic chips with pipetting arms without clamping the chip to a worktable of the laboratory automation device is solved. This enables a flexible chip movement inside the laboratory automation device. The microfluidic device does not require mounting on the worktable and can be picked up similar to disposable pipette tips allowing flexible movement during operation. The microfluidic device may be a consumable, which is put on top of the pipette tips. After use, the microfluidic device may be disposed together with the pipette tips. It is an advantage that the laboratory automation device can be loaded with many microfluidic device, which can then be processed automatically without intervention by a user. The user is then free for other work for a longer period of time. A so-called "walk away system" may be enabled.

The microfluidic device may have a flat body, i.e., a height of the body may be substantially smaller than an extension of the body in a horizontal direction. For example, from a view from above, the body may have a rectangular and/or the body may be cuboid. The channel may be embedded into the body. The receptacles may be attached to an upper surface and/or a top side of the body. However, it also may be that the receptacles are provided within the body.

The microfluidic device may be made from plastics material, for example by injection moulding. The microfluidic device may be designed as a consumable and/or disposable item. It may be mass-produced from polypropylene. It may be a single use consumable and thus sterile and save from cross-contamination.

It may be that the microfluidic device is made from solely one material, such as plastics material and/or polypropylene and/or polycarbonate. No further parts, in particular made from electrically conducting material, may be integrated into the microfluidic device.

According to an embodiment, the first receptacle and the second receptacle have the same inner shape and optionally outer shape. Each of the receptacles of the microfluidic device are designed, such that a lower section of a pipette tip fits into the receptacle and stays there by friction fit, after being pressed into the receptacle. In other microfluidic devices, the pipettes are only used to fill the receptacles with samples and reagents. In the present disclosure, two pipetting channels are used for controlled movement of the liquid inside the microfluidic device.

The inner shape of each receptacle, in particular of an inner surface of the receptacle, may be equal to an outer shape of the lower section of a pipette tip, in particular an outer surface of the lower section of the pipette tip. It is also possible that two different types of pipette tips are used, for example a 50 µl tip for the sample and a 200 µl tip for the buffer. In this case, the inner shapes of the receptacles may be different and/or may be adapted to to an outer shape of the possibly different lower sections of the pipette tips.

In general, the lower section of the pipette tip becomes smaller towards an outer end and/or the inner shape and/or surface of the receptacle becomes smaller towards the channel, i.e., the receptacle is tapered. As an example, each of the first receptacle and the second receptacle may have a conical inner shape and/or conical inner surface.

According to an embodiment, each of the first receptacle and the second receptacle have a guiding surface and an adjoining sealing surface. The sealing surface may be the inner surface of the receptacle at which the pipette tip sticks with friction fit. Both the guiding surface and the sealing surface may be tapered and/or may have decreasing diameter towards the respective chamber. The guiding surface may have a larger opening angle as the sealing surface. The guiding surface may have an opening angle of more than 45° and/or the sealing surface may have an opening angle of less than 45°.

There may be more than one sealing surface. The pipette tip may stick to the receptacle at least two sealing surfaces. This may be the case, when the pipette tip has a curved and/or bent outer surface.

According to an embodiment, the sealing surface of the first tapered receptacle has an angle between 4° and 8° with respect to an axis of the respective first tapered receptacle and second tapered receptacle. The opening angle of the conical surface with respect to the axis may be between 4° and 8°. Analogously, the sealing surface of the second tapered receptacle may have an opening angle between 4° and 8°.

According to an embodiment, an upper rim of the first receptacle and an upper rim of the second receptacle are at the same horizontal level. This may help to insert two pipette tips at the same time.

According to an embodiment, the microfluidic device comprises an outlet connected to the channel. The outlet may be used for pressure exchange with an exterior of the microfluidic device. The outlet may be provided in an upper surface and/or a top side of the body of the microfluidic device.

According to an embodiment, the channel solely interconnects tapered receptacles of the microfluidic device. It may be that the only connections of the channel with an exterior of the microfluidic device are the tapered receptacles. In other words, when all tapered receptacles of the microfluidic device are closed with a pipette tip, the pressure inside the microfluidic device can be controlled completely with the one or more pressure generators of the laboratory automation device.

According to an embodiment, the channel is fluid tight with respect to an exterior of the microfluidic device. There are no openings interconnecting the channel with an exterior of the microfluidic device except the tapered receptacles.

According to an embodiment, the microfluidic device further comprises at least one third tapered receptacle connected to the channel. The microfluidic device may be connected to three or more pipetting tips.

According to an embodiment, the first tapered receptacle, the second tapered receptacle and the at least one third tapered receptacle are aligned along one line. In such a way, a pipetting arm with pipetting channels that are solely movable along one axis with respect to each other may be used.

According to an embodiment, the microfluidic device further comprises electric and/or electronic components for performing measurements in the channel. For example, electric lines and/or electrodes may be embedded into the material of the microfluidic device. There may be electric contacts on a surface of the microfluidic device, which are connected to a measurement device, when the pipetting arm presses the microfluidic device on the measurement device.

According to an embodiment, the microfluidic device further comprises a transparent window towards the channel. The channel may have a cavity, with a transparent window. The pipetting arm may lower the microfluidic device onto a measurement device, which performs measurements based on light radiated through the window.

A further aspect of the invention relates to a microfluidic set for a laboratory automation device. The microfluidic set may be seen as the microfluidic device and further disposable equipment to be used together with the microfluidic device. This equipment may include pipette tips and trays.

According to an embodiment, the microfluidic set comprises one or more microfluidic devices such as described herein and one or more pairs of pipette tips having ends fitting into the first receptacle and the second receptacle of the microfluidic devices. The microfluidic devices may be equally designed and/or the pipette tips may be equally designed.

A further aspect of the invention relates to a method for operating a microfluidic device with a laboratory automation device. The method may be performed automatically by the laboratory automation device. It has to be understood that features of the method as described in the above and in the following may be features of the laboratory automation device described herein, and vice versa.

According to an embodiment, the method comprises: mounting a first pipette tip and a second pipette tip to a pipetting arm of the laboratory automation device. The first pipette tip and the second pipette tip may be taken from a pipette tip tray.

According to an embodiment, the method comprises: mounting a microfluidic device to a pipetting arm of the laboratory automation device, wherein a first pipette tip and a second pipette tip are connected to the pipetting arm, wherein the microfluidic device is mounted by inserting the first pipette tip into a first receptacle and the second pipette tip into a second receptacle of the microfluidic device. Both the pipette tips stay in the receptacles by friction fit and the microfluidic device may be moved around in the laboratory automation device with the pipetting arm. The microfluidic device may be taken from a tray, in which a plurality of equally designed microfluidic devices is stored.

The laboratory automation device has a pipetting arm, which is adapted for mounting at least two pipette tips. Furthermore, the laboratory automation device and in particular the pipetting arm may be adapted for setting a distance between the pipette tips to a distance between the receptacles of the microfluidic device.

According to an embodiment, the method comprises: generating a pressure difference in a channel interconnecting the first receptacle and the second receptacle, such that a liquid inside the microfluidic device is moved through the channel, wherein for generating the pressure difference, different pressures are applied to the first receptacle and the second receptacle via the first pipette tip and the second pipette tip, which are connected to at least one pressure generation device of the laboratory automation device. There may be a separate pressure generator, such as a syringe pump, per pipette tip. Alternatively, the pressure in more than one pipette tip is generated with one pressure generator and valves.

The laboratory automation device is adapted for generating individual pressures inside the pipette tips. There may be valves, which reduce a pressure from the pressure generator, such as a pump, to pressures to be applied to the pipette tips. The pressure difference between the pipette tips may be set, such that a pressure difference is generated between ends of the channel. A flow of the liquid inside the channel is generated in this way.

According to an embodiment, the method comprises: transporting the microfluidic device with the pipetting arm to a measurement device of the laboratory automation device for performing measurements in the microfluidic device. The measurement device may be arranged on a workbench of the laboratory automation device. Such as described above, the microfluidic device may be connected via electric connections to the measurement device and/or measurements may be performed through a window of the microfluidic device.

According to an embodiment, the method comprises: aspirating a liquid into the first pipette tip and/or the second pipette tip. This may be achieved by generating an underpressure in the first pipette tip and/or the second pipette tip with the at least one pressure generator. Aspiration may be performed before the first pipette tip and/or the second pipette tip is connected to the microfluidic device.

According to an embodiment, the method comprises: dispensing the liquid from the first pipette tip and/or the second pipette tip into the channel. This may be done after the first pipette tip has been inserted into the first receptacle and/or the second pipette tip has been inserted into the second receptacle. This may be achieved by generating an overpressure in the first pipette tip and/or the second pipette tip with the at least one pressure generator.

A further aspect of the invention relates to a computer program for operating a laboratory automation device, which, when being executed by a processor, is adapted to carry out the steps of the method as described herein. For example, a laboratory automation device, which is performing the method automatically, is controlled by a computing device, such as a controller integrated into the laboratory automation device or a PC connected to the laboratory automation device. The computer program may be stored in the computing device and/or may be executed by a processor of the computing device.

A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g., the Internet, which allows downloading a program code. In general, the computer-readable medium may be a non-transitory or transitory medium.

A further aspect of the invention relates to a laboratory automation device comprising a pipetting arm, at least one pressure generator and optionally a measurement device. Also one or more microfluidic devices may be part of the laboratory automation device. The pipetting arm is adapted for grabbing a first pipette tip and a second pipette tip for plugging and/or inserting the pipette tips into the microfluidic device. The at least one pressure generator is adapted for generating a first pressure in the first pipette tip and a second pressure in the second pipette tip, wherein the second pressure is different from the first pressure. The measurement device is adapted for performing measurements with the microfluidic device. The laboratory automation device may comprise a controller or more general computing device for automatically performing the method as described herein.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2 shows a cross-sectional view of a microfluidic device according to an embodiment of the invention.
Fig. 3 shows a top view of a microfluidic device according to an embodiment of the invention.
Fig. 4 shows a top view of a microfluidic device according to an embodiment of the invention.
Fig. 5 shows a top view of a microfluidic device according to an embodiment of the invention.
Fig. 6 shows a perspective view of a microfluidic device according to an embodiment of the invention.
Fig. 7 shows a cross-sectional view of a microfluidic device according to an embodiment of the invention.
Fig. 8 shows a flow diagram of a method for operating a microfluidic device according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

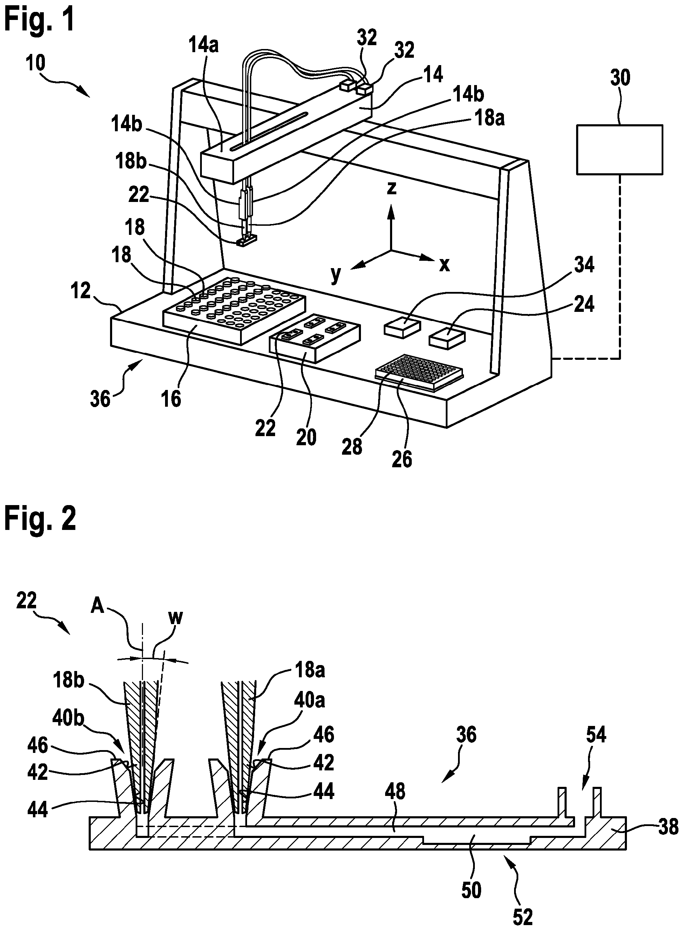

Fig. 1 shows a laboratory automation device 10 with a baseplate and/or worktable 12 and a pipetting arm 14. On the baseplate, a tray 16 for pipette tips 18, a tray 20 for microfluidic devices 22, a liquid container 24, and microtiter plates 26 with wells 28 are arranged.

The laboratory automation device 10 furthermore comprises a controller 30, which is adapted to control the laboratory automation device 10 and in particular the pipetting arm 14, pressure generators 32 and a measurement device 34.

By the control of the controller 30, the laboratory automation device 10 is adapted to automatically perform the following method. Two pipette tips 18a, 18b are picked up with the pipetting arm 14 from the tray 16. Here, the pipetting arm 14 is moved above the pipette tips 18 in the tray 16 and then lowered onto the respective pipette tips 18. In particular, the horizontal part 14a of the pipetting arm 14 moves to the x-y location of the pipette tips 18 and the pipetting channels 14b of the pipetting arm 14 move in z-direction to the z location to pick up the respective pipette tip 18.

With the first pipette tip 18a, a liquid is aspirated from a first container, such as a well 28 from the microtiter plate 26. To this end, the pipetting arm 14 moves the first pipette tip 18a into the respective well 28 and the pressure generator 32 generates a suitable underpressure in the first pipette tip 18a.

After that, a microfluidic device 22 is picked up with the pipetting arm 14 from the tray 20. The pipetting arm 14 moves the first pipette tip 18a and the second pipette tip 18b above the respective microfluidic device 22 in the tray 20 and then inserts the pipette tips 18a, 18b into the microfluidic device 22, which has corresponding receptacles.

As described above and below, with the generation of suitable pressures in the pipette tips 18a, 18b, the liquid is pumped through a channel in the microfluidic device 22. Furthermore, the microfluidic device 22 is moved to the measurement device 34 and measurements are performed with the microfluidic device 22.

The pipette tips 18 and the microfluidic devices 22 may be seen as a microfluidic device set 36. Two of the pipette tips 18a, 18b and one microfluidic device 22 may be attached together to be transported by the laboratory automation device 10 and to perform measurements with the measurement device 34.

Fig. 2 shows an embodiment of a microfluidic device 22 in more detail. The microfluidic device 22 may be made from plastics material by injection moulding. The microfluidic device 22 may be designed as a consumable and/or disposable item.

The microfluidic device 22 has a substantially flat body 38, i.e., the height of the body 38 may be substantially smaller than an extension of the body in a horizontal direction. For example, from a view from above, the body 38 may have a rectangular and/or the body may be cuboid.

At a top side of the body 38, the microfluidic device 22 has two receptacles 40a, 40b, which are designed to receive the two pipette tips 18a, 18b. The first receptacle 40a is for receiving the first pipette tip 18a, the second receptacle 40b is for receiving the second pipette tip 18b. In particular, the first receptacle 40a and the second receptacle 40b are designed for receiving a lower end and/or lower section of the pipette tip 18a, 18b, with the orifice for aspirating and dispensing. Each of the receptacles 40a, 40b is designed, such that the lower end of the pipette tip 18a, 18b fits into the receptacle 40a, 40b and stays there by friction fit, after being pressed into the receptacle 40a, 40b. The inner shape of each receptacle 40a, 40b may be equal to an outer shape of the lower section of the pipette tip 18a, 18b. As they are both designed for receiving the same type of pipette tip 18, the first receptacle 40a and the second receptacle 40b may have the same inner shape and optionally outer shape.

As an alternative, the inner shapes of the receptacle 40a, 40b are different and/or may be equal to outer shapes of the lower sections of different types of pipette tips 18a, 18b. I.e. the pipette tips 18a, 18b may be of different type and/or may have a different geometry and/or outer shape. The first receptacle 40a and the second receptacle 40b may have different inner shapes and/or outer shapes.

The receptacles 40a, 40b are both tapered, i.e., they have an opening decreasing in diameter in a direction, in which the respective pipette tip 18a, 18b is inserted into the respective receptacle 40a, 40b. An inner surface 42, 44 of the receptacle 40a, 40b becomes smaller towards the body 38 and/or a bottom side of the microfluidic device 22. The receptacle 40a, 40b may have a conical inner shape and/or conical inner surface 42, 44. In particular, the receptacle 40a, 40b may have a guiding surface 42 and an adjoining sealing surface 44. The sealing surface 44 may be the inner surface of the receptacle 40a, 40b at which the pipette tip 18a, 18b sticks with friction fit. Both the guiding surface 42 and the sealing surface 44 may be tapered and/or may have decreasing diameter towards the body 38 and/or the bottom side of the microfluidic device 22. The guiding surface 42 may have a larger opening angle as the sealing surface 44. The sealing surfaces 44 of the receptacles 40a, 40b may have an angle w between 4° and 8° with respect to an axis A of the respective receptacle 40a, 40b.

An upper rim 46 of the first receptacle 40a and an upper rim 46 of the second receptacle 40b may be at the same horizontal level.

The microfluidic device 22 further comprises a channel 48, which may be seen as a microchannel, interconnecting the first receptacle 40a and the second receptacle 40b. For example, the channel may have a diameter between 100 µm and 1000 µm, and depending on the application as low as 10 µm. By applying different pressures to the pipette tips 18a, 18b, liquid may be pumped through the channel 48. Such a liquid may be already present in the channel 48 or may be dispensed into the channel 48 via one of the pipette tips 18a, 18b.

The channel 48, which is embedded into the body 38, may comprise cavities and/or chambers 50 in which chemical reactions take place. The channel 48 may comprise a window 52 for performing measurements with light inside the channel 48.

It may be that the microfluidic device 22 comprises an outlet 54 connected to the channel 48. The outlet 54 may be used for pressure exchange with an exterior of the microfluidic device 22. The outlet 54 may be provided in an upper surface and/or at a top side of the body 38 of the microfluidic device 22.

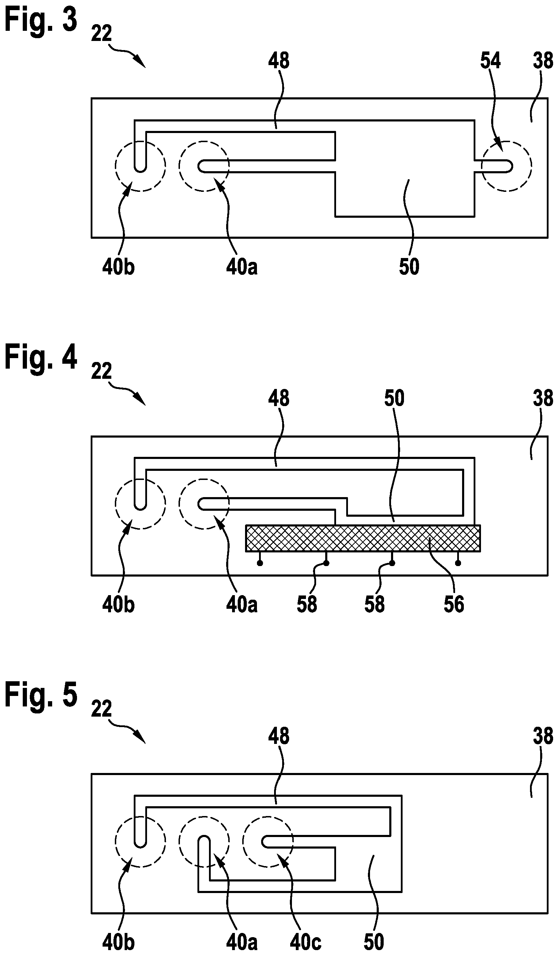

Fig. 3 shows a schematic top view of an embodiment of a microfluidic device 22. It can be seen that the channel 48 may have different diameters, may open into cavities and/or may have branching points. In general, the channel 48 may meander through the body 38 of the microfluidic device 22.

Fig. 4 shows a schematic top view of an embodiment of a microfluidic device 22, in which a pressure exchange of the channel 48 solely can take place via the receptacles 40a, 40b. The channel 48 solely interconnects the tapered receptacles 40a, 40b of the microfluidic device 22. The only connections of the channel 48 with an exterior of the microfluidic device 22 are the tapered receptacles 40a, 40b. The channel 48 is fluid tight with respect to an exterior of the microfluidic device 22. There are no openings interconnecting the channel 48 with an exterior of the microfluidic device 22 except the tapered receptacles 40a, 40b. When all tapered receptacles 40a, 40b of the microfluidic device 22 are closed with a pipette tip 18a, 18b, the pressure inside the microfluidic device 22 can be controlled completely with the one or more pressure generators 32 of the laboratory automation device 10. The fluid is moved in the microfluidic device 22 via the synchronised pipetting channels 14b. The system and/or the channel 48 inside the microfluidic device 22 may be closed, i.e. there may be no venting ports and/or valves to an exterior of the microfluidic device 22.

The microfluidic device 22 of Fig. 1-3 may be made solely of a plastics material. Fig. 4, however, shows that the microfluidic device 22 may comprise electric and/or electronic components 56 for performing measurements inside the channel 48. The electric and/or electronic components 56 may be embedded into the body 38. For performing the measurements, the microfluidic device 22 may be transported with the pipetting arm 14 to the measurement device 34. There, electric connections 58, which may be provided on a surface of the body 38 and/or which are connected with the electric and/or electronic components 56, may be pressed against corresponding contacts of the measurement device 34.

Fig. 5 shows a schematic top view of an embodiment of a microfluidic device 22, which has more than two tapered receptacles 40a, 40b, 40c. The microfluidic device 22 further comprises at least one third tapered receptacle 40c connected to the channel 48. The microfluidic device 22 may be connected to three or more pipetting tips 18. The tapered receptacles 40a, 40b, 40c are aligned along one line. In such a way, a pipetting arm 14 with pipetting channels 14b that are solely movable along one axis with respect to each other may be used.

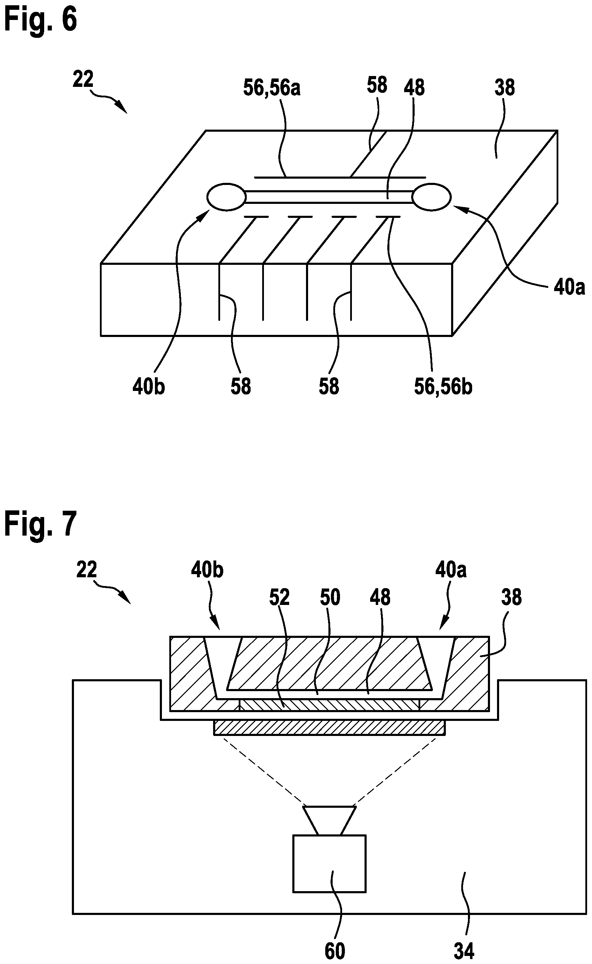

Fig. 6 shows a schematic perspective view of a further embodiment of a microfluidic device 22. A single straight channel 48 simply connects the two receptacles 40a, 40b. A long ground electrode 56a runs parallel to the channel 48. There is a plurality of measuring electrodes 56b on the other side of the channel 48. Electric lines lead from the electrodes 56a, 56b to side walls of the body 38 of the microfluidic device 22, where they end in electric connections 58. The measurement device 34 may have curved spring contacts to connect to the electric connections 58 and/or to pick up the signals, which are evaluated in the measurement device 34. Electrical measurement variables may be resistance, capacity, permittivity, etc.

Fig. 7 shows a schematic cross-sectional view of a further embodiment of a microfluidic device 22, which is seated on a measurement device 34, which is an imaging station 34 with a camera 60.

It is shown that the receptacles 40a, 40b also may be provided within the body 38, i.e., that their upper rim is flush with an upper surface of the body 38 of the microfluidic device 22. The inner surfaces of the receptacles 40a, 40b may be formed such as described with respect to Fig. 2.

The microfluidic device 22 has an optically transparent base and/or window 52. The channel 48 in the microfluidic device 22 may also expand into a wider chamber 50 above the window 52. Visible light and/or thermal radiation may be detected with the camera 60.

The microfluidic device 22 also may be used for fluorescence measurements. The excitation wavelength may be irradiated from below and the emission wavelength may be measured from below. In this case, the body 38 of the microfluidic device 22 may be black except the window 52 to minimize background fluorescence. For example, specific capture molecules may be applied in clusters (dots) to the transparent bottom and/or window 52 of the microfluidic device 22 inside the channel 48. Fluorescence-labeled analytes or proteins may be added into the channel 48, for example with a pipette tip 18a. Via fluorescence it is detected, which clusters the analyte molecules or proteins have coupled to.

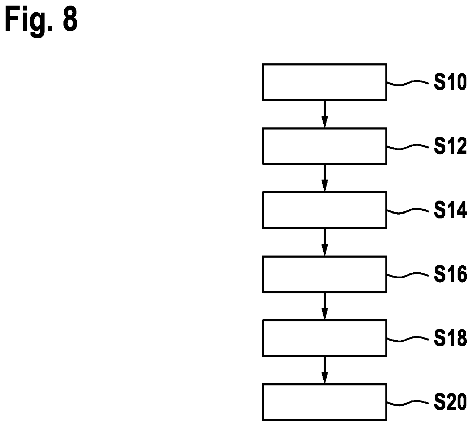

Fig. 8 shows a flow diagram for a method for operating a microfluidic device 22 with the laboratory automation device 10. The method may be performed automatically by the laboratory automation device 10. The laboratory automation device 10 is controlled by the controller 30, which may be a PC connected to the laboratory automation device 10 or may be integrated into the laboratory automation device 10. The controller 30 may comprise microcontrollers that are adapted to communicate via a set of firmware commands that are sent via a connected PC and a graphical user interface.

In step S10, a first pipette tip 18a and a second pipette tip 18b are mounted to the pipetting arm 14 of the laboratory automation device 10. The first pipette tip 18a and the second pipette tip 18b may be taken from the pipette tip tray 16. Two pipette tips 18a, 18b are picked up with the pipetting arm 14 from the tray 16. Here, the pipetting arm 14 is moved above the pipette tips 18 in the tray 16 and then lowered onto the respective pipette tip 18, which then is mounted to the pipetting arm 14.

In step S12, a liquid is aspirated into the first pipette tip 18a and/or the second pipette tip 18b. This may be achieved by generating an underpressure in the first pipette tip 18a and/or the second pipette tip 18b with the corresponding pressure generator 32. The liquid may be aspirated from a container 24 and/or a well 28 from the microtiter plate 26. Before, the pipetting arm 14 may have moved the first pipette tip 18a into the respective well 28.

In step S14, a microfluidic device 22 is mounted to the pipetting arm 14 of the laboratory automation device 10. The microfluidic device 22 is mounted by inserting the first pipette tip 18a into the first receptacle 40a and the second pipette tip 18b into the second receptacle 40b of the microfluidic device 22. The microfluidic device 22 may be picked up with the pipetting arm 14 from the pipette tip tray 16. The pipetting arm 14 may move the first pipette tip 18a and the second pipette tip 18b above the respective microfluidic device 22 in the pipette tip tray 16 and then may insert the pipette tips 18a, 18b into the corresponding receptacles 40a, 40b. The pipetting arm 14 may be adapted for setting a distance between the pipette tips 18a, 18b to a distance between the receptacles 40a, 40b of the microfluidic device 22. The microfluidic device 22 may be taken from a tray 20, in which a plurality of equally designed microfluidic devices 22 are stored.

Both pipette tips 18a, 18b stay in the receptacles 40a, 40b by friction fit and the microfluidic device 22 may be moved around in the laboratory automation device 10 with the pipetting arm 14.

In step S16, the liquid is dispensed from the first pipette tip 18a and/or the second pipette tip 18b into the channel 48. This may be achieved by generating an overpressure in the first pipette tip 18a and/or the second pipette tip 18b with the at least one pressure generator 32. Gas, such as air, inside the channel 48 is pushed by the liquid through the channel 48 and may leave the microfluidic device 22 through the outlet 54. Alternatively, the gas may be aspirated by the other pipette tip 18b.

In general, a pressure difference is generated between ends of the channel 48, such that a liquid inside the microfluidic device 22 is moved through the channel 48. For generating the pressure difference, different pressures are applied to the first receptacle 40a and the second receptacle 40b via the first pipette tip 18a and the second pipette tip 18b. For example, in the first pipette tip 18a an overpressure and in the second pipette tip 18b an underpressure relative to each other is generated.

In step S18, the microfluidic device 22 is transported with the pipetting arm 14 to the measurement device 34 of the laboratory automation device 10 for performing measurements in the microfluidic device 22. Such as described above, the microfluidic device 22 may be connected via electric connections 58 to the measurement device 34 and/or measurements may be performed through a window 52 of the microfluidic device 22.

In step S20, after the measurements, the microfluidic device 22 is disposed together with the pipette tips 18a, 18b. The method may start again with step S10 with new pipetting tips 18a, 18b and a new microfluidic device 22, which are used for performing the next measurement with the next sample.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: worktable
- 14: pipetting arm
- 14a: horizontal part
- 14b: pipetting channel
- 16: pipette tip tray
- 18: pipette tip
- 18a: first pipette tip
- 18b: second pipette tip
- 20: microfluidic device tray
- 22: microfluidic device
- 24: liquid container
- 26: microtiter plate
- 28: well
- 30: controller
- 32: pressure generator
- 34: measurement device
- 36: microfluidic set
- 38: body
- 40a: first receptacle
- 40b: second receptacle
- 42: guiding surface
- 44: sealing surface
- 46: upper rim
- 48: channel
- 50: cavity
- 52: window
- 54: outlet
- 56: electric and/or electronic components
- 56a: electrode
- 56b: electrode
- 58: electric connection
- 60: camera

## Claims

1. A microfluidic device (22) for a laboratory automation device (10), comprising:
a first tapered receptacle (40a) and a second tapered receptacle (40b);
a channel (48) interconnecting the first tapered receptacle (40a) and the second tapered receptacle (40b).

2. The microfluidic device (22) of claim 1,
wherein the first tapered receptacle (40a) and the second tapered receptacle (40b) have the same inner shape.

3. The microfluidic device (22) of claim 1or 2,
wherein each of the first tapered receptacle (40a) and the second tapered receptacle (40b) have a guiding surface (42) and an adjoining sealing surface (44);
wherein the guiding surface (42) has a larger opening angle as the sealing surface (44).

4. The microfluidic device (22) of one of the preceding claims,
wherein a sealing surface (44) of the first tapered receptacle (40a) and a sealing surface (44) of the second tapered receptacle (40b) have an angle between 4° and 8° with respect to an axis (A) of the respective first tapered receptacle (40a) and second tapered receptacle (40b).

5. The microfluidic device (22) of one of the previous claims, further comprising:
an outlet (54) connected to the channel (48).

6. The microfluidic device (22) of one of claims 1 to 4,
wherein the channel (48) solely interconnects tapered receptacles (40a, 40b, 40c) of the microfluidic device (22); and/or
wherein the channel (48) is fluid tight with respect to an exterior of the microfluidic device (22).

7. The microfluidic device (22) of one of the previous claims, further comprising:
at least one third tapered receptacle (40c) connected to the channel (48);
wherein the first tapered receptacle (40a), the second tapered receptacle (40b) and the at least one third tapered receptacle (40c) are aligned along one line.

8. The microfluidic device (22) of one of the previous claims, further comprising:
electric and/or electronic components (56) for performing measurements in the channel (48); and/or
a transparent window (52) towards the channel (48).

9. A microfluidic set (36) for a laboratory automation device (10), comprising:
a microfluidic device (22) according to one of the previous claims;
two pipette tips (18) having ends fitting into the first tapered receptacle (40a) and the second tapered receptacle (40b).

10. A method for operating a microfluidic device (22) with a laboratory automation device (10), the method comprising:
mounting the microfluidic device (22) to a pipetting arm (14) of the laboratory automation device (10), wherein a first pipette tip (18a) and a second pipette tip (18b) are connected to the pipetting arm (14), wherein the microfluidic device (22) is mounted by inserting the first pipette tip (18a) into a first receptacle (40a) and the second pipette tip (18b) into a second receptacle (40b) of the microfluidic device (22).

11. The method of claim 10, further comprising:
generating a pressure difference in a channel interconnecting the first receptacle (40a) and the second receptacle (40b), such that a liquid inside the microfluidic device (22) is moved through the channel (48), wherein for generating the pressure difference, different pressures are applied to the first receptacle (40a) and the second receptacle (40b) via the first pipette tip (18a) and the second pipette tip (18b), which are connected to at least one pressure generation device (32) of the laboratory automation device (10).

12. The method of claim 10 or 11, further comprising:
transporting the microfluidic device (22) with the pipetting arm (14) to a measurement device (34) of the laboratory automation device (10) for performing measurements in the microfluidic device (22).

13. The method of one of claims 10 to 12, further comprising:
aspirating a liquid into the first pipette tip (18a);
dispensing the liquid from the first pipette tip (18a) into the channel (48).

14. A computer program for operating a laboratory automation device (10), which, when being executed by a processor, is adapted to carry out the steps of the method of one of claims 11 to 13.

15. A computer-readable medium, in which a computer program according to claim 14 is stored.

16. A laboratory automation device (10), comprising:
a pipetting arm (14);
at least one pressure generator (32);
a microfluidic device (22) according to one of the claims 1 to 9;
wherein the laboratory automation device (10) is adapted for performing the method of one of claims 11 to 13.
